# EUROPEAN PATENT APPLICATION

(11) **EP 4 734 562 A1**
(43) Date of publication of application: **29.04.2026**
(21) Application number: 24826310.5
(22) Date of filing: 21.06.2024
(51) Int. Cl.: H04W 4/06, H04N 21/6405, H04N 21/61, H04W 76/40

(54) **METHOD AND APPARATUS FOR TRANSMITTING AND RECEIVING MOBILE COMMUNICATION MULTICAST BROADCAST SERVICE BASED ON BROADCAST NETWORK**

(30) Priority: 22.06.2023 KR 20230080653
(71) Applicant: LG Electronics Inc., Yeongdeungpo-gu Seoul 07336 (KR)
(72) Inventor: KWON, Woosuk, Seoul 06772 (KR); YOON, Joonhee, Seoul 06772 (KR)
(74) Representative: Mooser, Sebastian Thomas
(86) International application number: PCT/KR2024/008631
(87) International publication number: WO 2024/262995

(57) **Abstract**

A broadcast service transmission method for providing a multicast and broadcast service of mobile communication, according to embodiments of the present invention, may comprise the steps of: provisioning a multicast/broadcast service (MBS); provisioning an MBS session; and announcing a service for the MBS user service. A broadcast service receiving method for providing a multicast and broadcast service of mobile communication, according to embodiments, may comprise the steps of: receiving service announcement information for an MBS user service; announcing a broadcast service on the basis of the service announcement information; and receiving a broadcast service on the basis of a broadcast network.

## Description

### TECHNICAL FIELD

The present disclosure relates to a method and apparatus for transmitting and receiving mobile communication multicast broadcast services in mobile communication based on a broadcast network.

### BACKGROUND

With the advancement of digital technology and communication technology, the distribution and demand for audio/video-centered multimedia content are rapidly expanding in various fields, including broadcasting, film, the internet, and personal media. In addition, with the development of display technology and the increasing size of television TV screens at home, discussions on Ultra High Definition (UHD) broadcasting services are on the rise.

In relation to broadcasting services, a multicast transmission method, which provides the same content to multiple users, is effective as the multicast transmission method is capable of taking advantage of both unicast and broadcast transmission methods. However, the conventional multicast transmission method is only possible within a single network and has the drawback of not supporting multicast services across heterogeneous networks. As a result, when multicast receiving devices connect to or disconnect from different access networks, there is a problem in that an existing multicast service needs to be terminated and a new multicast service should be started. In addition, when multiple transmission protocols are used, if a protocol that constitutes the payload over the Internet Protocol/User Datagram Protocol (IP/UDP) or Internet Protocol/Transmission Control Protocol (IP/TCP) is not registered with Internet Assigned Numbers Authority (IANA), it is difficult to identify the protocol using a port number. In the case of IP multicast, since the destination address and port number use values assigned to the multicast, all receivers receive the corresponding packet. However, if an unknown protocol is used, there is a problem in that it is impossible to process the multicast for the corresponding packet.

### DISCLOSURE

### TECHNICAL PROBLEM

The object of the present disclosure is to provide an efficient method and apparatus for transmitting and receiving mobile communication multicast broadcast services based on a broadcast network.

According to the method and apparatus for transmitting and receiving network-based mobile communication multicast broadcast services, the multicast and broadcast services offered by a mobile communication network may be provided through a broadcast network, thereby allowing a broadcast network receiving device to receive the multicast and broadcast services of the mobile communication.

However, the object of the present disclosure are not limited to what has been particularly described hereinabove. The scope of rights of the embodiments may be extended to other objects that could be inferred by those skilled in the art based on the entirety of the content.

### TECHNICAL SOLUTION

A broadcast service transmission method for providing multicast and broadcast services in mobile communication according to embodiments may include: provisioning a Multicast/Broadcast Service (MBS) user service; provisioning an MBS session; and performing a service announcement for the MBS user service. A broadcast service reception method for providing multicast and broadcast services in mobile communication according to embodiments may include: receiving service announcement information for an MBS user service; performing a broadcast service announcement based on the service announcement information; and receiving a broadcast service based on a broadcast network.

### ADVANTAGEOUS EFFECTS

A method and apparatus for transmitting and receiving network-based mobile communication multicast broadcast services according to embodiments may enable reception of multicast/broadcast services provided by a mobile communication system, such as a Fifth Generation (5G) system, through a broadcast network.

Interworking with functions used in existing broadcast networks enables seamless multicast/broadcast services even in various network environments.

By transmitting multicast/broadcast services of mobile communication over a broadcast network, the services may be received even outside the coverage of a mobile communication network.

Even when multiple devices are connected to different networks, the same level of broadcast service may be provided.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:
FIG. 1 illustrates a service-based architecture of a mobile communication system according to embodiments.
FIG. 2 illustrates a reference relationship of a mobile communication system architecture according to embodiments.
FIG. 3 illustrates a mobile communication system architecture for multiple Protocol Data Unit (PDU) sessions according to embodiments.
FIG. 4 illustrates a mobile communication system architecture for simultaneous connections to two networks according to embodiments.
FIG. 5 illustrates a user plane protocol stack according to embodiments.
FIG. 6 illustrates Unified Data Management (UDM) according to embodiments.
FIG. 7 illustrates an internetworking architecture of a mobile communication system according to embodiments.
FIG. 8 illustrates a mobile communication Multicast/Broadcast Service (MBS) network architecture according to embodiments.
FIG. 9 illustrates a User Datagram Protocol (UDP) tunnel (user plane protocol stack) for an MBS session according to embodiments.
FIG. 10 illustrates plain Internet Protocol (IP) multicast (user plane protocol stack for an MBS session) according to embodiments.
FIG. 11 illustrates a user plane protocol stack for an MBS session according to embodiments.
FIG. 12 illustrates a user service network architecture according to embodiments.
FIG. 13 illustrates functions for MBS user services according to embodiments.
FIG. 14 illustrates a Multicast/Broadcast Service Function (MBSTF) according to embodiments.
FIG. 15 illustrates an MBSTF according to embodiments.
FIG. 16 illustrates an MBS user service according to embodiments.
FIG. 17 illustrates a mobile communication MBS based on a broadcast system according to embodiments.
FIG. 18 illustrates a network architecture for applying an MBS for mobile communication to a broadcast system according to embodiments.
FIG. 19 illustrates functions for providing MBS services over a broadcast network according to embodiments.
FIG. 20 illustrates a protocol stack for converting MBS data into services for a broadcast system according to embodiments.
FIG. 21 illustrates a structure for providing an MBS for mobile communication via a broadcast system according to embodiments.
FIG. 22 illustrates a flowchart for providing an MBS for mobile communication via a broadcast system according to embodiments.
FIG. 23 illustrates a broadcast service transmission method for providing multicast and broadcast services in mobile communication according to embodiments.
FIG. 24 illustrates a broadcast service reception method for providing multicast and broadcast services in mobile communication according to embodiments.

### DETAILED DESCRIPTION

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

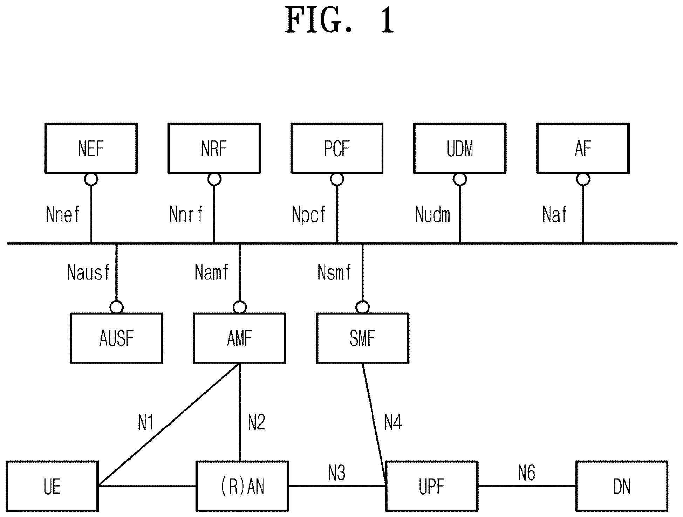

FIG. 1 illustrates a service-based architecture of a mobile communication system according to embodiments.

The embodiments include a method for providing mobile communication multicast and broadcast services through a broadcast network. The broadcast network according to the embodiments may include, for example, Advanced Television Systems Committee (ATSC) 3.0. The broadcast network is not limited to ATSC 3.0, and is interpreted as a term including other broadcast network standards. In this document, ATSC 3.0 is used as an example to describe the embodiments. The mobile communication according to the embodiments may include Fifth Generation (5G). The mobile communication network is not limited to 5G, and is interpreted as a term including other mobile communication network standards. In this document, 5G is used as an example to describe the embodiments.

The embodiments relate to a device and method for processing signals for multicast and broadcast services.

For example, 3rd Generation Partnership Project (3GPP) defines the multicast/broadcast service architecture and protocols based on 5G. The configuration of reference points related to the network entities necessary for providing multicast and broadcast services in a 5G network has been established, and the high-level syntax and call flows for the related protocols have been defined.

For example, Digital Video Broadcasting (DVB) has defined (Digital Video Broadcasting - Internet) DVB-I standards for IP-based broadcasting services and methods for providing service lists and service announcements through IP-based networks. In addition, a technical document has been prepared to consider a method for extending DVB-I to the 5G network.

ATSC is also considering a method to extend multicast and broadcast services provided through the 5G network to the broadcast network. Various scenarios have been reviewed, and a plan has been established to define specific technologies for the scenarios.

The linkage between 5G multicast/broadcast services and broadcast networks is being discussed from various perspectives by multiple standardization groups.

The multicast/broadcast network architecture currently being discussed in 5G is the basic network architecture for services provided by the 5G network, and devices such as TV receivers that do not connect to the 5G access network may not receive the corresponding services.

Providing the same media content as separate services through the 5G network and broadcast network may be a major cause of increased network traffic and fragmentation of service providers. If the same media is provided as a single unified service whenever possible, the efficiency of network traffic and service management may be improved.

The embodiments include a structure for providing multicast/broadcast services offered by the 5G system through the broadcast network.

The embodiments include a path for providing multicast/broadcast services on the network via the ATSC 3.0 network.

The embodiments include a method for efficiently providing multicast/broadcast services across multiple networks.

The embodiments include a network architecture for providing multicast/broadcast services transmitted through the 5G system via the broadcast network.

The embodiments include a method for interworking a network architecture defined in existing broadcast systems with the 5G system.

The embodiments include functions and related operations for providing an interface between 5G and broadcast networks.

The embodiments enable multicast/broadcast services provided by the 5G system to be transmitted and received through the broadcast network.

The embodiments enable seamless multicast/broadcast services even in various network environments through interworking with functions used in existing broadcast networks.

The embodiments allow transmission of 5G multicast/broadcast services through the broadcast network, thereby enabling transmission and reception of multicast/broadcast services even outside the coverage of the 5G network.

The embodiments may provide the same level of broadcast service even when various devices are connected to different networks.

The 5G system architecture according to the embodiments is shown in FIG. 1, and the network functions (NFs) of the 5G system include the following: AUSF (Authentication Server Function), AMF (Core Access and Mobility Management Function), DN (Data Network), where the DN may include operator services, internet access, or third-party services. In addition, the NFs of the 5G system include SDSF (Structured Data Storage network function), UDSF (Unstructured Data Storage network function), NEF (Network Exposure Function), NRF (NF Repository Function), PCF (Policy Control Function), SMF (Session Management Function), UDM (Unified Data Management), UPF (User Plane Function), AF (Application Function), UE (User Equipment), and (R)AN ((Radio) Access Network).

FIG. 1 illustrates a service-based interface architecture for non-roaming cases of the 5G system. User plane data is delivered through the DN, UPF, (R)AN, and UE, while other functions may handle control plane data. Each service-based interface is as follows: Namf: service-based interface by AMF, Nsmf: service-based interface by SMF, Nnef: service-based interface by NEF, Npcf: service-based interface by PCF, Nudm: service-based interface by UDM, Naf: service-based interface by AF, Nnrf: service-based interface by NRF, and Nausf: service-based interface by AUSF.

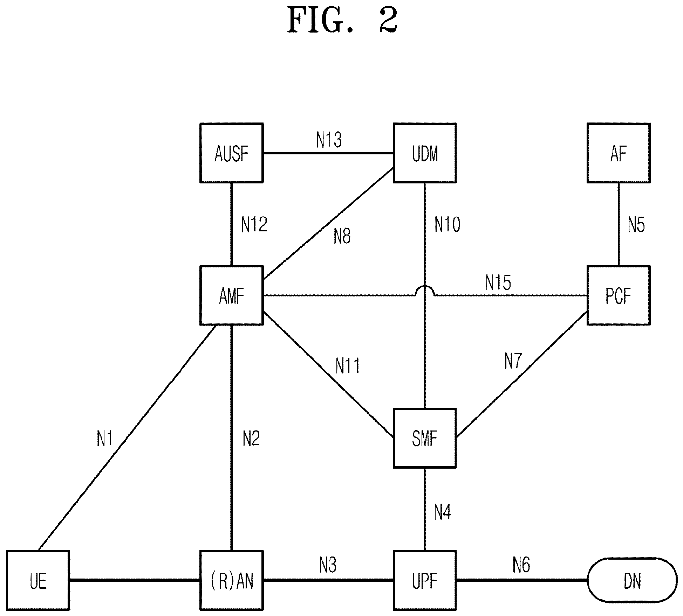

FIG. 2 illustrates a reference relationship of a mobile communication system architecture according to embodiments.

FIG. 2 shows a 5G system architecture for non-roaming cases. That is, FIG. 2 illustrates how various network functions interact with each other using reference points.

User plane data is delivered through the DN, UPF, (R)AN, and UE, while other functions may handle control plane data. Accordingly, data is delivered through the reference points N6 and N3 between the corresponding functions, and the connection between the (R)AN and UE may be established wirelessly. Here, the reference points may be defined as follows: N1: reference point between UE and AMF, N2: reference point between (R)AN and AMF, N3: reference point between (R)AN and UPF, N4: reference point between SMF and UPF, N5: reference point between PCF and AF, N6: reference point between UPF and DN, N7: reference point between SMF and PCF, N7r: reference point between PCF in a visited network and PCF in a home network, N8: reference point between UDM and AMF, N9: reference point between two core UPFs, N10: reference point between UDM and SMF, N11: reference point between AMF and SMF, N12: reference point between AMF and AUSF, N13: reference point between UDM and authentication server AUSF, N14: reference point between two AMFs, N15: reference point between PCF and AMF in the non-roaming scenario or reference point between PCF and AMF in a visited network in the roaming scenario, N16: reference point between two SMFs (in the case of roaming, reference point between SMF in a visited network and SMF in a home network), N17: reference point between AMF and EIR, N18: reference point between NF and UDSF, and N19: reference point between NEF and SDSF.

The reference points listed above may be defined as separate protocols or as messages with individual identifiers on a common protocol. To this end, a control plane interface may be physically shared with other reference points, and the reference point may be identified using each protocol or message set.

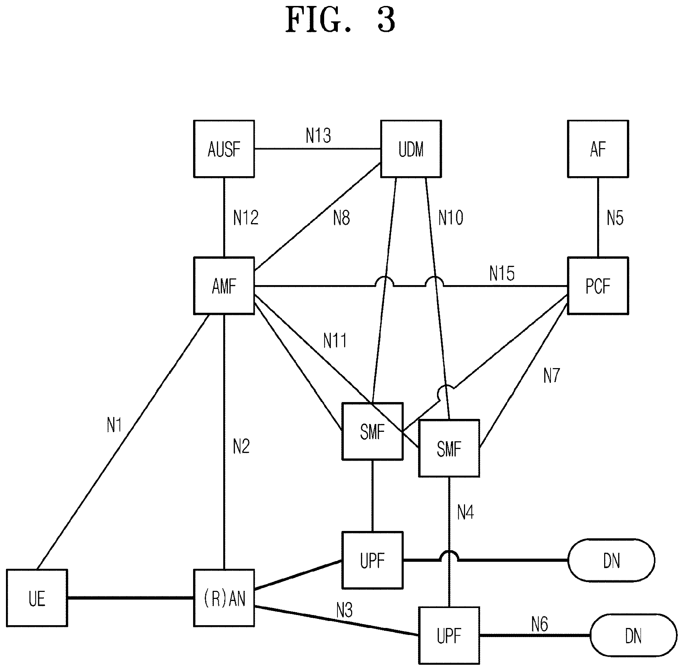

FIG. 3 illustrates a mobile communication system architecture for multiple Protocol Data Unit (PDU) sessions according to embodiments.

FIG. 3 shows a network architecture for supporting two DNs, based on the above-described 5G system architecture. To connect to a DN, a UPF and SMF may be separately configured for the corresponding DN, and these functions may also be connected through respective control plane functions and the corresponding reference points. Accordingly, each DN provides a separate PDU session, and the SMF may control the corresponding session.

FIG. 3 shows simultaneous connections to two DNs, but depending on the network configuration, it is possible to connect to more than two DNs.

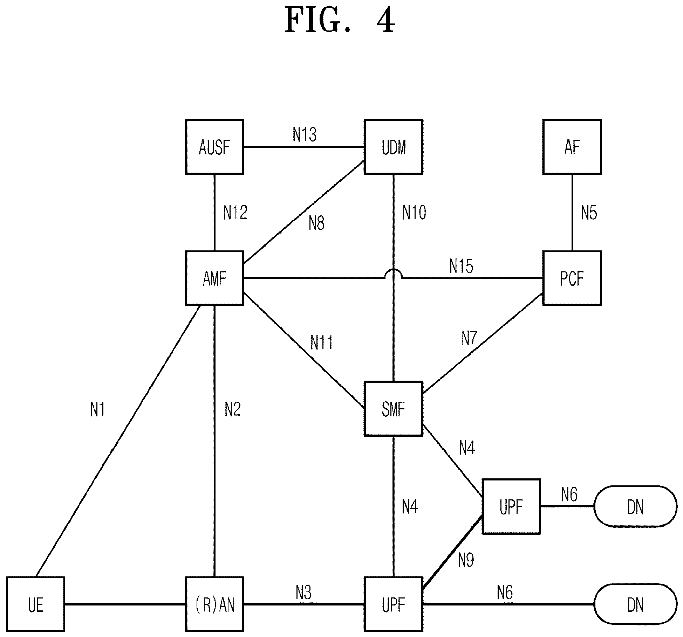

FIG. 4 illustrates a mobile communication system architecture for simultaneous connections to two networks according to embodiments.

FIG. 4 shows a 5G system architecture for simultaneous connections to two DNs with a single PDU session.

FIG. 4 shows a network architecture in which a single SMF is used in a structure connected to two DNs to enable PDU sessions provided by each DN to operate as a single session.

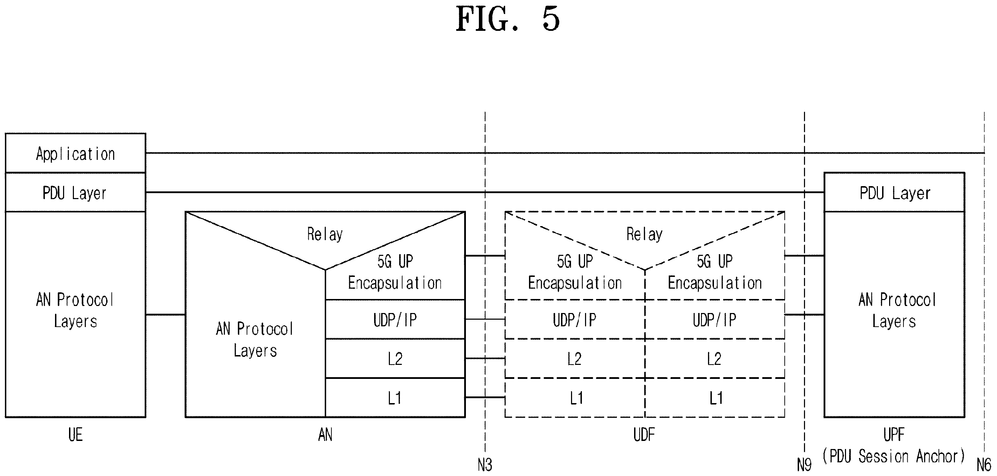

For the network architecture of FIG. 4, the user plane protocol stack for a single PDU session may be defined as shown in FIG. 5.

FIG. 5 illustrates a user plane protocol stack according to embodiments.

PDU layer: This layer corresponds to the PDU exchanged between the UE and DN through the PDU session. If the PDU session type is IPv6, it corresponds to an IPv6 packet. If the PDU session type is Ethernet, it corresponds to an Ethernet frame.

5G encapsulation: This layer supports multiplexed traffic of various PDU sessions (which may correspond to different PDU session types) over N3 (i.e., between an access network (AN) and a 5G Core (5GC)) or N9 (i.e., between different UPFs in the 5GC). The 5G encapsulation layer provides encapsulation at the PDU session level and also provides indications related to Quality of Service (QoS) flows.

AN protocol stack: This set of protocols/layers depends on the AN. If the AN is a 3GPP RAN, the protocols/layers are defined by the 3GPP RAN.

The number of UPFs in the data path is not restricted by 3GPP specifications. The data path of a PDU session may include zero, one, or multiple UPFs that do not support a PDU session anchor function for the PDU session. In the case of IP, the UPF that acts as the PDU session anchor in the PDU session type is the IP anchor point for the IP address/prefix assigned to the UE.

For the previously described 5G architecture, each network function is defined as follows:

### AMF (Access and Mobility Management Function):

The AMF may include the following functions. A single AMF instance may support all or some of the following functions:
RAN CP interface (N2) termination, NAS (N1), NAS encryption and integrity protection termination, registration management, connection management, accessibility management, mobility management, lawful interception (for AMF events and LI system interfaces), provision of SM message transfer between the UE and SMF, transparent proxy for SM message routing, access authentication, access authorization, provision of SMS message transfer between the UE and SMSF, Security Anchor Function (SEA), reception of an intermediate key generated as a result of a UE authentication process through interaction with the AUSF and UE, retrieval of security material from the AUSF by the AMF for Universal Subscriber Identity Module (USIM) based authentication, Security Context Management (SCM), and reception of a key used to derive access-network-specific keys for SCM from the SEA.

In addition, the AMF may include the following functions to support non-3GPP ANs.

The AMF supports an N2 interface using a Non-3GPP Interworking Function (N3IWF). In this interface, specific information (e.g., 3GPP cell identity) and procedures (e.g., handover-related) defined for 3GPP access may not be applied, while non-3GPP access-specific information not applicable to 3GPP access may be applied.

The AMF supports NAS signaling with the UE through the N3IWF. Some procedures supported by NAS signaling over 3GPP access may not be applied to untrusted non-3GPP access (e.g., paging).

Additionally, the functions of a single AMF instance include: support for UE authentication connected via the N3IWF, management of mobility, authentication, and separate security context states for UEs connected via non-3GPP access or simultaneously via both 3GPP and non-3GPP access, support for a coordinated Registration Management (RM) context valid for both 3GPP and non-3GPP access, and support for a dedicated Connection Management (CM) context for UEs for connections through non-3GPP access.

### SMF (Session Management Function):

The SMF may include the following functions. A single SMF instance may support all or some of the following functions:

Session management: The session management includes session establishment, modification, and release including tunnel maintenance between the UPF and AN node, UE IP address allocation and management (including optional authorization), selection and control of UP functions, configuration of traffic steering at the UPF to route traffic to an appropriate destination, interface termination toward the policy control function, enforcement of policies and partial control of QoS, lawful interception (for SM events and LI system interfaces), termination of the SM part of NAS messages, downlink data notifications, initiation of AN-specific SM information transmitted via N2 to the AN through the AMF, determination of an SSC mode for sessions, and handling of local enforcement to apply roaming functions (QoS SLA (VPLMN), charging data collection and charging interfaces (VPLMN), lawful interception (for SM events in the VPLMN and LI system interfaces), support for interaction by an external DN for signaling transmission for PDU session authorization/authentication by the external DN).

### UPF (User Plane Function):

The UPF may include the following functions. A single UPF instance may support all or some of the following functions:

The functions are: an anchor point for intra-/inter-RAT mobility (if applicable), an external PDU session point of interconnection to the DN, packet routing and forwarding, packet inspection and user plane part of policy rule enforcement, lawful interception (UP collection), traffic usage reporting, uplink classifier supporting traffic flow routing to the DN, a branching point for supporting multi-homed PDU sessions, QoS handling in the user plane (e.g., packet filtering, gating, UL/DL rate enforcement, uplink traffic verification with mapping from the SDF to the QoS flow), transport-level packet marking for uplink and downlink, and downlink packet buffering and triggering of downlink data notifications.

### PCF (Policy Function):

The PCF may include the following functions:
The functions are: support of a unified policy framework for managing network operations, provision and enforcement of policy rules to control plane functions, and implementation of a front end to access subscription information in a User Data Repository (UDR) related to policy decisions.

### NEF (Network Exposure Function):

The NEF may include the following functions:
The functions are: provision of a secure means to expose services and capabilities offered by 3GPP network functions for third parties, internal exposure/re-exposure, application functions, edge computing, etc., reception of information from other network functions (based on the exposed capabilities of the functions), and storing of the received information as structured data using a standardized interface to a data storage network function (defined by 3GPP). The stored information may be "re-exposed" by the NEF to other network functions and application functions, and may also be used for other purposes such as analytics.

### NRF (NF Repository Function):

The NRF may include the following functions:
The functions are: support of service discovery functionality, reception of NF discovery requests from NF instances, provision of information about discovered NF instances to the requesting NF, and maintaining information about available NF instances and supported services.

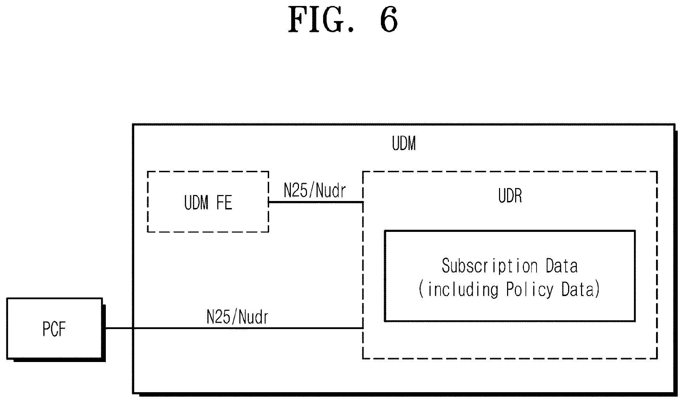

FIG. 6 illustrates UDM according to embodiments.

FIG. 6 shows the UDM of the NF according to embodiments. The UDM may be classified into an application front end (FE) and a UDR.

FIG. 6 shows the reference architecture for the UDM, which may include the following front ends.

UDM FE: The UDM FE is responsible for credential handling, location management, and subscription management.

PCF: The PCF is responsible for policy control. The PCF is a standalone network function in the overall 5GC architecture and is not part of the UDM. However, the PCF may request and provide policy subscription information to the UDR, and thus, the PCF is shown in the UDM architecture.

The UDR stores data required for functions provided by the UDM-FE and policy profiles needed by the PCF. The data stored in the UDR includes: subscription identifiers, security credentials, access and mobility-related subscription data, and user subscription data including session-related subscription data.

### Policy Data

The UDM-FE accesses subscription information stored in the UDR and supports the following functions: authentication credential handling, user identity handling, access authorization, registration/mobility management, subscription management, and SMS management. The front end implements application logic and does not require an internal UDR. Multiple different front ends may serve the same user in different transactions.

The reference point/interface N25/Nudr is defined for the front end to support reading, updating (including addition and modification), deletion, subscription to data change notifications, and receiving data change notifications from the UDR. N25 is the name of a point-to-point (P2P) reference point, and Nudr is the name of a service-based interface.

Both the FE and the UDR are located in a Home Public Land Mobile Network (HPLMN).

### AUSF (Authentication Server Function):

The AUSF supports the following functions: support of the AUSF.

### AF (Application Function):

The AF interacts with the 3GPP core network to provide services that support, for example: influence of an application on traffic routing, access to network function exposure, and interaction with a policy framework for policy control.

Depending on the operator deployment, AFs considered trusted by the operator may directly interact with relevant network functions.

AFs that are not permitted by the operator to directly access network functions interact with the relevant network functions using the external exposure framework through the NEF.

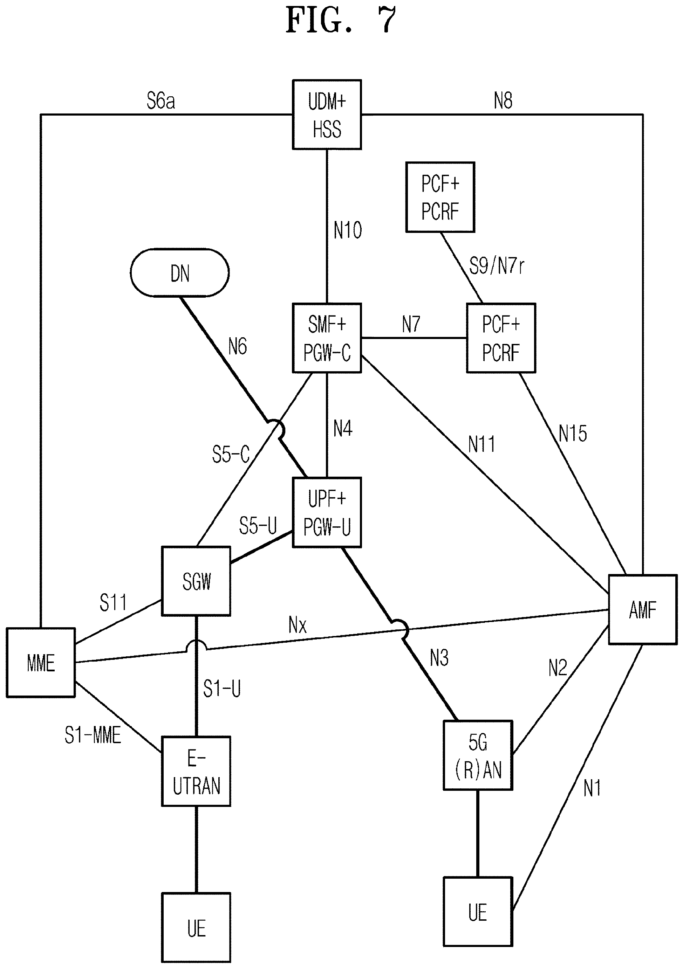

FIG. 7 illustrates an internetworking architecture of a mobile communication system according to embodiments.

FIG. 7 shows the architecture for internetworking between the 5G system and EPC/E-UTRAN (4G system) in the case of non-roaming.

PCF + PCRF, PGW-C + SMF, and UPF + PGW-U may be optionally applied for interworking between the 5G system and EPC. For UEs that do not support interworking between the 5G system and EPC, services may be provided by non-interworking entities, such as PGW/PCRF or SMF/UPF/PCF.

Hereinafter, the reference architecture for 5G multicast/broadcast user services will be described.

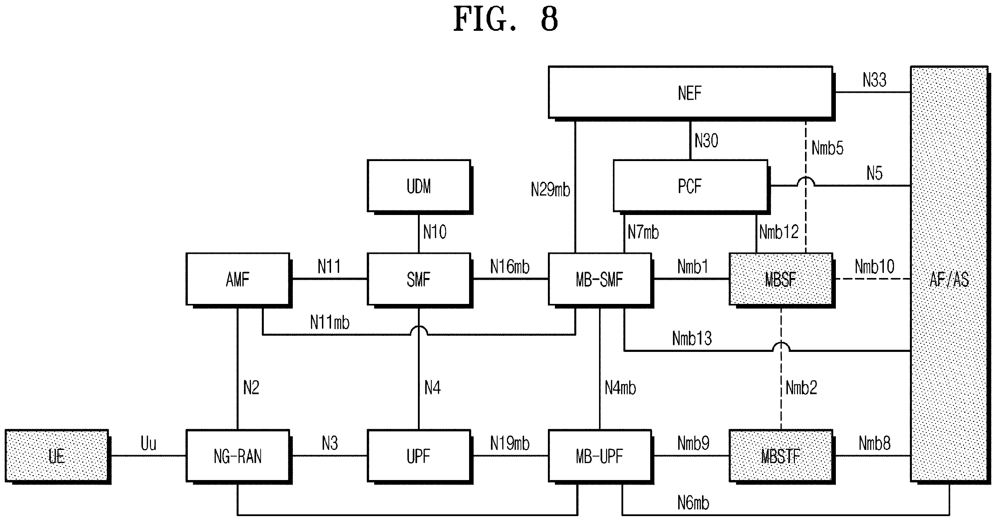

FIG. 8 illustrates a mobile communication Multicast/Broadcast Service (MBS) network architecture according to embodiments.

The following describes the reference architecture for 5G multicast-broadcast user services, including logical functions and logical reference points between the logical functions. The term MBS stands for a multicast/broadcast service.

FIG. 8 shows the 5G MBS network architecture.

FIG. 8 may be considered as an embodiment of a network architecture for MBS based on a 5G core network for the MBS. In this architecture, reference points may be configured as follows.

Nmb13, N29mb, and Nmb1 may be configured as the same interface.

Nmb5 and Nmb10 may be configured as the same interface.

Nmb9 and N6mb may be configured as the same interface.

The following functions: AF/AS, Multicast/Broadcast Service Function (MBSF), and Multicast/Broadcast Service Transport Function (MBSTF) may operate as functions that provide MBS user services to the UE. Additionally, the reference points Nmb10, Nmb2, Nmb8, and Nmb5 may be used to provide MBS user services.

The reference point Nmb10 may be used by the AF/AS to invoke the Nmbsf service in order to provide MBS user services to the MBSF.

The reference point Nmb2 may be used by the MBSF to invoke the Nmbstf service in order to configure and control the MBS user service distribution method of the MBSTF. If an MBS user service announcement channel is in use, the MBSF may additionally push an object manifest, which describes a set of user service announcement objects, to the MBSTF.

The reference point Nmb8 may be used by the MBSTF to ingest content from the AF/AS.

The operations performed by each function to support the MBS are as follows:

### PCF:

The PCF may perform the following functions to support the MBS.

If dynamic Policy and Charging Control (PCC) for the MBS is required, the PCF performs the following functions to support the MBS:
The functions are: support of QoS handling for MBS sessions, provision of MBS session-related policy information to the MB-SMF for QoS profile authorization, and interaction with the UDR to retrieve QoS information.

The PCF may receive MBS information from the AF, NEF, or MBSF, depending on various configuration options.

### MB-SMF (Multicast/Broadcast Session Management Function):

The MB-SMF may perform the following functions to support the MBS.

The general aspects of multicast and broadcast MBS sessions are as follows:
Supporting MBS session management (including QoS control), configuring a Multicast/Broadcast User Plane Function (MB-UPF) for multicast and broadcast data transfer based on policy rules for the MBS from the PCF or local policies, and allocating and deallocating a Temporary Mobile Group Identity (TMGI).

For broadcast MBS sessions, interaction with the RAN via the AMF is performed to control data transmission using the 5GC shared MBS traffic delivery method.

For multicast MBS sessions, interaction with the SMF is performed to provide MBS session context information to the SMF.

For the 5GC shared MBS traffic delivery method, data transmission resources between the MB-UPF and the RAN node are established through interaction with the RAN via the AMF.

For multicast data transmission using the 5GC dedicated MBS traffic delivery method, the MB-UPF is controlled accordingly.

### SMF (Session Management Function):

The SMF may perform the following functions to support MBS:

The SMF may discover the MB-SMF for multicast MBS sessions.

The SMF authorizes a multicast MBS session join procedure for the UE receiving the service, if necessary.

The SMF interacts with the MB-SMF to obtain multicast session context information used as an input for modifying a PDU session related to the MBS session.

The SMF interacts with the RAN to provide information about the multicast MBS sessions the UE is participating in.

The SMF interacts with the RAN and UPF for multicast data transmission using the 5GC dedicated MBS traffic delivery method.

The SMF and MB-SMF may be co-located or deployed separately.

### MB-UPF (Multicast/Broadcast User Plane Function)

The MB-UPF may perform the following functions to support MBSs.

The general aspects of multicast and broadcast MBS sessions are as follows:
Incoming downlink packets for multicast and broadcast flows are processed, and the QoS is enforced based on existing mechanisms (e.g., MFBR). Interaction with the MB-SMF is performed for receiving multicast and broadcast data. Multicast and broadcast data is delivered to the RAN node for the 5GC shared MBS traffic delivery method.

For multicast MBS sessions, multicast data is delivered to the UPF for the 5GC dedicated MBS traffic delivery method.

### UPF (User Plane Function)

The UPF may perform the following functions to support MBS.

The UPF interacts with the SMF to receive multicast data from the MB-UPF for the 5GC dedicated MBS traffic delivery method.

The UPF delivers multicast data to the UE via the PDU session for the 5GC dedicated MBS traffic delivery method.

The UPF and MB-UPF may be co-located or deployed separately.

### AMF:

The AMF may perform the following functions to support MBS:

The AMF transmits signals using the NG-RAN and MB-SMF for MBS session management.

The AMF selects the NG-RAN for notifying multicast session activation to UEs in the CM-IDLE state.

The AMF selects the NG-RAN for broadcast traffic distribution.

In addition, the AMF is aware of the NG-RAN 5G MBS capabilities.

### NG-RAN:

The NG-RAN may perform the following functions to support MBS:
The NG-RAN manages MBS QoS flows over N2.

The NG-RAN delivers MBS data packets over the air to multiple UEs using Point-To-Multipoint (PTM) or Point-To-Point (PTP).

The NG-RAN configures UEs at the Access Stratum (AS) layer for receiving MBS QoS flows.

The NG-RAN controls switching between PTM and PTP delivery per UE.

The NG-RAN supports multicast session service continuity during Xn handover and N2 handover.

The NG-RAN supports group paging for multicast session activation over the air toward UEs in the CM-IDLE state or in the RRC INACTIVE state of CM-CONNECTED

The NG-RAN receives MBS data packets from the 5GC through shared MBS traffic delivery.

### UE:

The UE may perform the following functions to support MBS:
The UE receives multicast data using PTM/PTP.

The UE receives broadcast data using PTM.

The UE processes incoming MBS QoS flows.

The UE supports signals for joining and leaving multicast MBS sessions.

The UE supports MBS resource management at the AS layer.

The UE receives notifications for multicast data transmission while in CM-IDLE state or in RRC INACTIVE state of CM-CONNECTED.

### AF:

The AF may perform the following functions to support MBS:

The AF provides service information, including QoS requirements, to the 5GC to request multicast or broadcast services.

If necessary, the AF i MBS session operations toward the 5GC.

The AF interacts with the NEF for MBS-related service exposure.

### NEF:

The NEF may perform the following functions to support MBS:
The NEF provides an interface to the AF for MBS procedures, including service provisioning, MBS session management, and QoS management.

The NEF interacts with the AF and NF in the 5GC. The NEF determines transport parameters for MBS session operations and selects the MB-SMF to provide the MBS session.

### MBSF (Multicast/Broadcast Service Function):

The MBSF may perform the following functions to support MBS:
The MBSF performs service-level functions for MBS support and interworking with the LTE MBMS.

The MBSF interacts with the AF and MB-SMF for MBS session operations, transport parameter determination, and session transmission.

The MBSF selects the MB-SMF to provide the MBS session.

The MBSF controls the MBSTF when the MBSTF is used.

The MBSF determines a target IP multicast address for the MBS session if an IP multicast address is provided by the MBSTF.

### MBSTF (Multicast/Broadcast Service Transport Function):

The MBSTF may perform the following functions to support MBS:
The MBSTF performs media anchor functions for MBS data traffic if necessary.

The MBSTF performs IP multicast source functions if necessary.

The MBSTF performs general packet transmission functions available in all IP multicast-supported applications, such as framing, multi-stream handling, and packet FEC (Forward Error Correction) encoding.

The MBSTF delivers input files as objects or object flows for multicast/broadcast transmission.

### UDM:

The UDM may perform the following function to support MBS:
The UDM supports subscription management for multicast MBS session authentication.

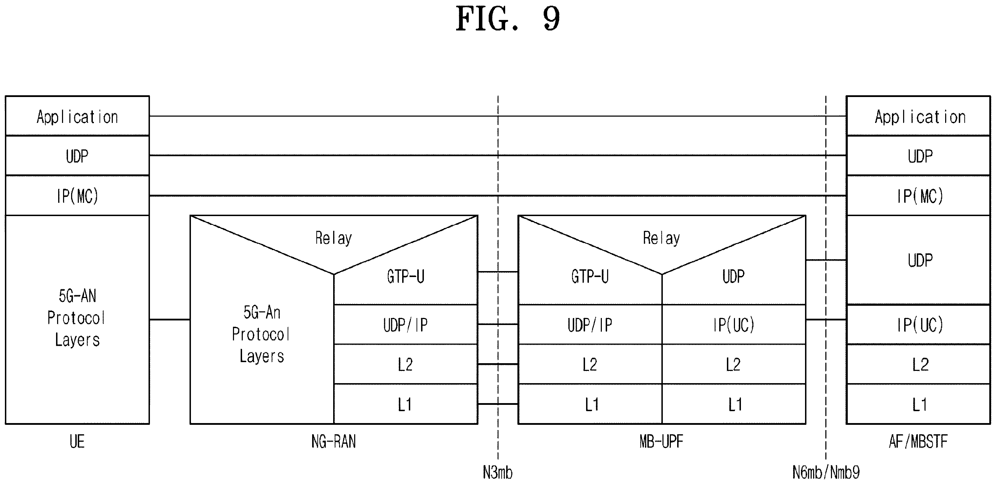

FIG. 9 illustrates a UDP tunnel (user plane protocol stack) for an MBS session according to embodiments.

Hereinafter, a user plane protocol stack for MBS will be described.

FIG. 9 shows a protocol stack over a core network for transmission of user plane data delivered from an AF/MBSTF to a UE.

### UDP Tunnel (User Plane Protocol Stack for MBS Session):

FIG. 9 shows the user plane protocol stack for the MBS session in the case of shared delivery, where the UDP tunnel is applied to the reference points N6mb and Nmb9.

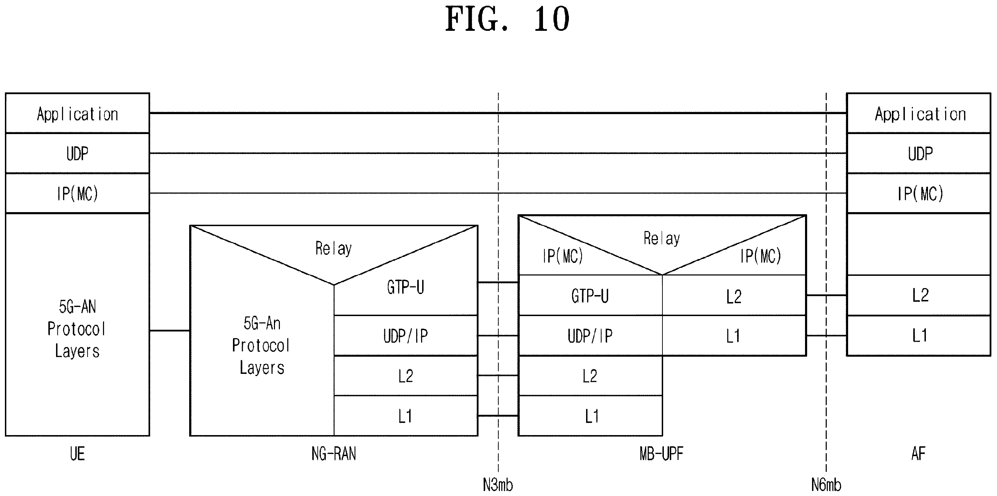

FIG. 10 illustrates plain IP multicast (user plane protocol stack for an MBS session) according to embodiments.

Plain IP Multicast (User Plane Protocol Stack for MBS Session)

FIG. 10 shows the user plane protocol stack for the MBS session in the case of shared delivery, where the plain IP multicast is applied to the reference point N6mb.

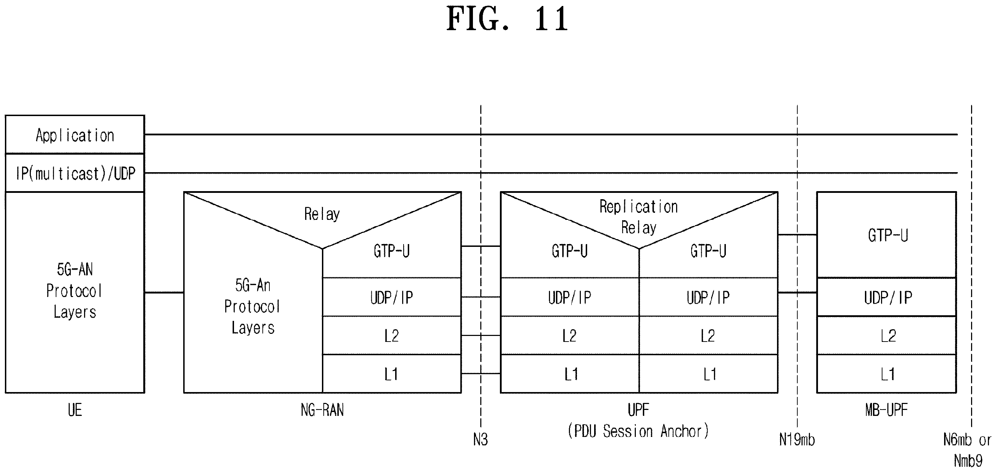

FIG. 11 illustrates a user plane protocol stack for an MBS session according to embodiments.

In the case of dedicated delivery, the user plane protocol stack for the MBS session is configured as shown in FIG. 11.

Here, 5G-AN protocol layers represent the protocols/layers applied to the access network, and 3GPP NR may be applied for a 5G MBS.

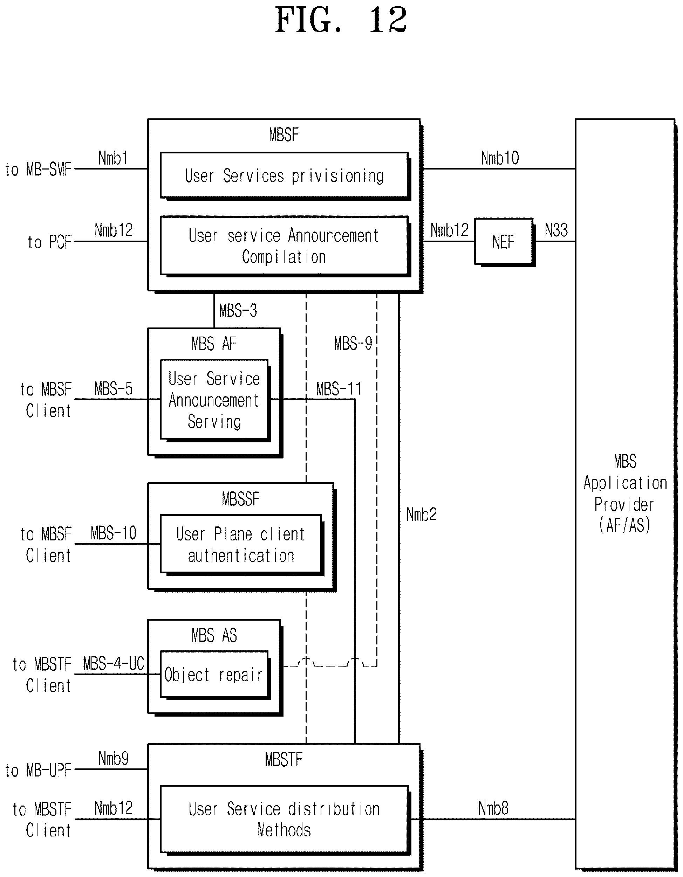

FIG. 12 illustrates a user service network architecture according to embodiments.

Regarding the user service network architecture, FIG. 12 illustrates an MBS user service architecture composed of entities involved in providing delivery and control for MBS user services. Here, the MBS application provider may perform the role of the AF/AS.

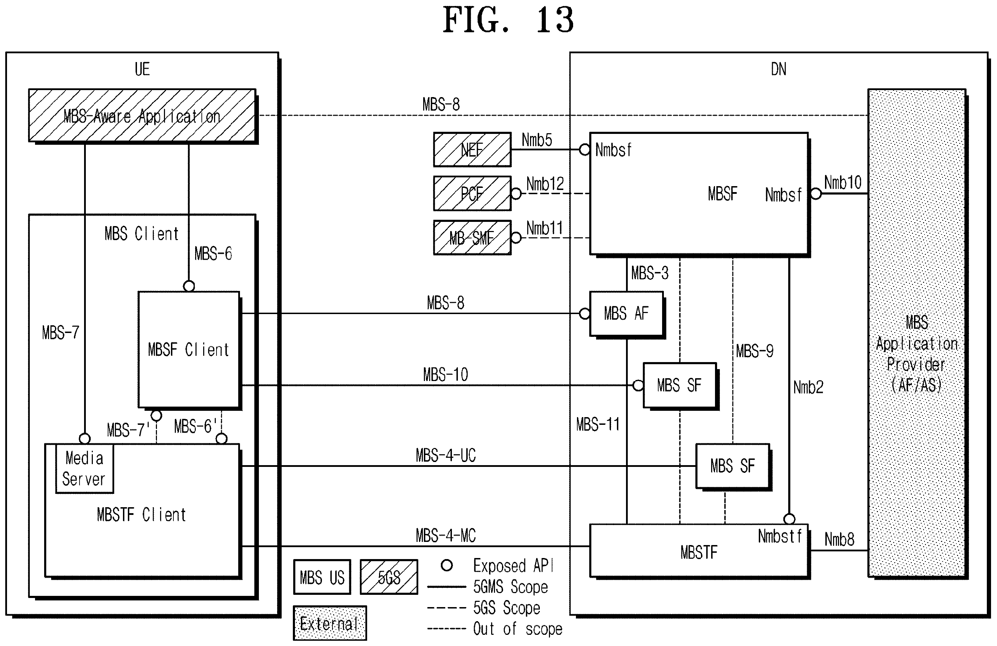

FIG. 13 illustrates functions for MBS user services according to embodiments.

Regarding functional entities, FIG. 13 shows the configuration of all functional entities involved in supporting MBS user services, including the UE, when the application provider is deployed within a trusted DN. Here, MBS-specific functions such as the MBS AS and MBSF are shown as independent and standalone functions, but in actual implementations, the functions may be deployed within the same device as other functions. For example, the MBS AS may be hosted in an MBS application provider domain or in a 5G Media Streaming (5GMS) AS.

Descriptions of each functional entity are as follows.

### MBSF:

The MBSF receives provisioning and control commands directly at the reference point Nmb10 or at the reference point Nmb5 (through the NEF). The MBSF invokes MBS session operations for the MB-SMF at reference point Nmb1. The MBSF configures the MBSTF at the reference point Nmb2.

Additional control plane functions of the MBSF that support MBS user services include the following.

The MBSF generates user service announcements for each MBS session. The MBSF manages updates to user service announcements.

The MBSF provides user service announcement information to an MBS client in a timely manner using one or more of the following mechanisms.

The mechanisms include: a unicast user service announcement delivered by the MBS AF via the reference point MBS-5, including the possibility of push or notification-based update mechanisms, a user service announcement delivered through an MBS distribution session by the MBSTF at the reference point MBS-4-MC (optionally through the same MBS distribution session as the advertised content or via a dedicated MBS distribution session managed by the MBSF referred to as the MBS), and a user service announcement channel delivered via application-private means at the reference point MBS-8.

### MBSTF:

The MBSTF receives user plane data traffic at the reference point Nmb8 and transmits MBS data packets to the MB-UPF via the reference point Nmb9.

Additional user plane functions of the MBSTF to support MBS user services include the following.

The MBSTF receives an MBS distribution session configuration from the MBSF via the reference point Nmb2.

The MBSTF transmits notification events to the MBSF (e.g., data collection failure, session termination) via the reference point Nmb2, based on the MBS distribution session configuration.

The MBSTF delivers collected objects or an object sequence to the MBS client using an object distribution method. This may be used to support real-time distribution of media segments (special objects), including Common Media Application Format (CMAF) segments.

The MBSTF delivers collected packet streams to the MBS client using a packet delivery method.

The MBSTF delivers MBS user service announcement information (including updates if necessary) in the MBS session.

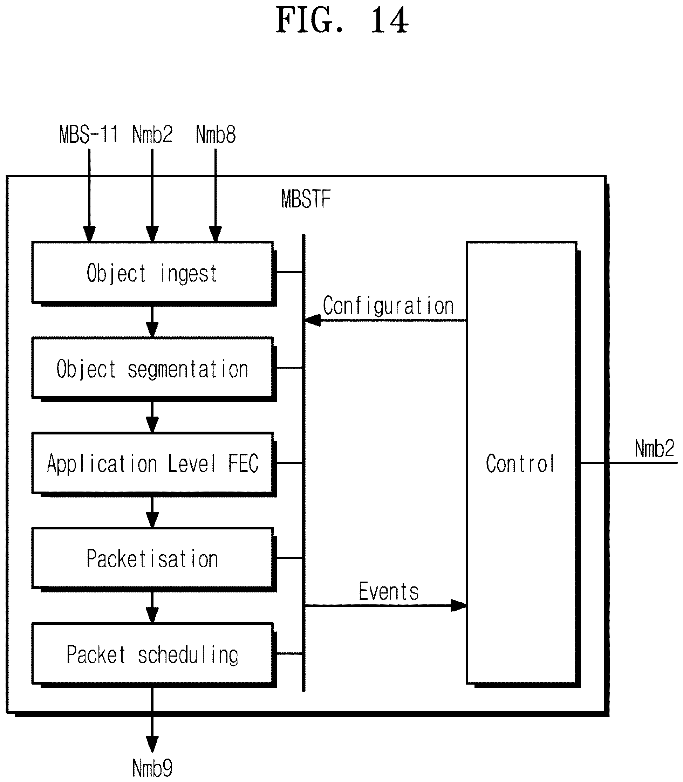

FIG. 14 illustrates an MBSTF according to embodiments.

Regarding MBSTF sub-functions that support the object distribution method, FIG. 14 illustrates the MBSTF sub-functions supporting the object distribution method.

The object collection sub-function supports the following:

Pool-based collection at reference point MBS 11: In this case, the object collection sub-function retrieves one or more objects from the MBS AF using Hypertext Transfer Protocol Secure (HTTPS) for inclusion in the MBS user service announcement channel (the set of objects to be included is listed in the object manifest previously retrieved from the MBS AF at the same reference point.)

Push-based collection at reference point Nmb2: The object collection sub-function receives an object manifest from the MBSF that describes the set of objects to be included in the MBS user service announcement channel. The MBSTF continuously retrieves the objects listed in the object manifest from the MBS AF via the reference point MBS-11. Pool-based collection at reference point Nmb8: In this case, the object collection sub-function retrieves one or more objects from the MBS application provider (AF/AS).

Push-based collection at reference point Nmb8: The object collection sub-function receives one or more objects from the AF/AS (MBS application provider).

The object collection procedures at the reference points Nmb2 and MBS-11 are a subset of those at the reference point Nmb8.

The object segmentation sub-function supports dividing objects into payload units suitable for MBS transmission.

The optional application-layer FEC sub-function supports object recovery when the MBMS client fails to receive some packets.

The packetization sub-function places the payload units (and optionally FEC data) into Nmb9 transmission packets.

The packet scheduling sub-function schedules an outgoing packet stream according to the target bit rate configuration.

The control sub-function provides support for an MBSTF service configuration, status queries, and notifications at the reference point Nmb2.

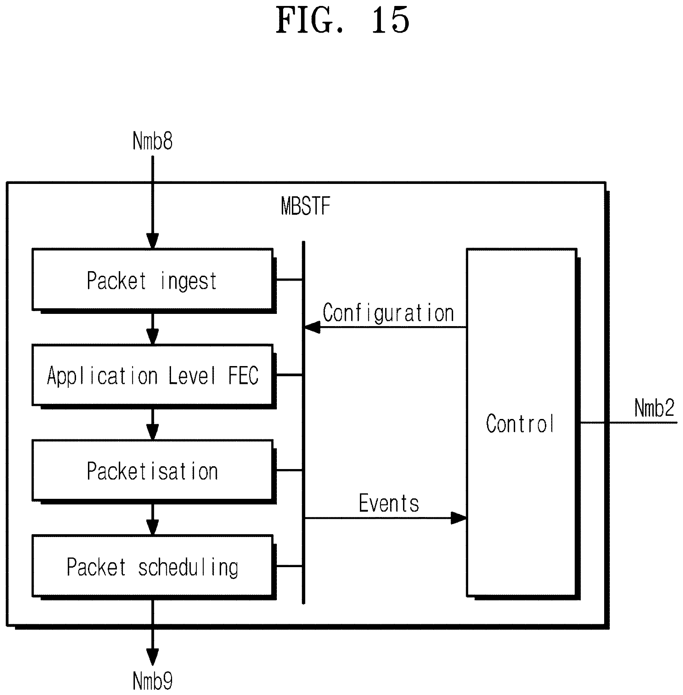

FIG. 15 illustrates an MBSTF according to embodiments.

Regarding the MBSTF sub-functions supporting the packet distribution method, FIG. 15 shows the MBSTF sub-functions that support the packet distribution method.

The packet collection sub-function supports reception of a packet sequence at the reference point Nmb2 from an authenticated source.

An optional application-layer FEC sub-function supports object recovery when the MBS client fails to receive some packets.

The packetization sub-function places collected packets (and optionally FEC data) into Nmb9 transport packets. Depending on the transmission mode, the collected packets may be reformatted to be suitable for MBS transmission.

The packet scheduling sub-function schedules an outgoing data stream according to the target bit rate configuration.

The control sub-function provides support for an MBSTF service configuration and service announcement at the reference point Nmb2.

### MBS Client:

The MBS client function is part of the UE. The MBS client is further divided into the following sub-functions.

MBSF Client: The MBSF client communicates with the MBS AF at the reference point MBS-5 for MBS user service control. The MBSF client communicates with an MBS Security Function (MBSSF) at the reference point MBS-10 to authenticate access to secured MBS data received from the reference point MBS-4-MC.

MBSTF client: The MBSTF client communicates with the MBSTF at the reference point MBS-4 MC and/or with the MBS AS at the reference point MBS-4 UC to provide an MBS application data session to an MBS-aware application.

The MBS client performs the following functions to support MBS user services.

The MBS client obtains MBSF-compiled user service announcements from the MBS AF at the reference point MBS 5 and/or from the MBSTF at the reference point MBS-4 MC.

The MBS client receives MBS data over a multicast MBS session or a broadcast MBS session via the reference point MBS-4 MC.

The MBS client performs exposure of the MBS application data session to the MBS-aware application.

If this optional function is provisioned for the MBS session, the MBS client recovers packets or objects using AL-FEC.

If unicast recovery is provided for the MBS session, the MBS client performs unicast recovery via the reference point MBS-4 UC for the application payload data of multicast/broadcast packets that are not successfully received via MBS-4 MC.

### MBS-Aware Application

The MBS client is generally controlled by an external application program that triggers the establishment of an MBS user service session. Although the MBS-aware application is not defined in this document, this function uses network functions that support the MBS client and (indirectly) the MBS user service (MBSF, MBSTF, and MBS AS) via the reference points MBS 6 and MBS 7.

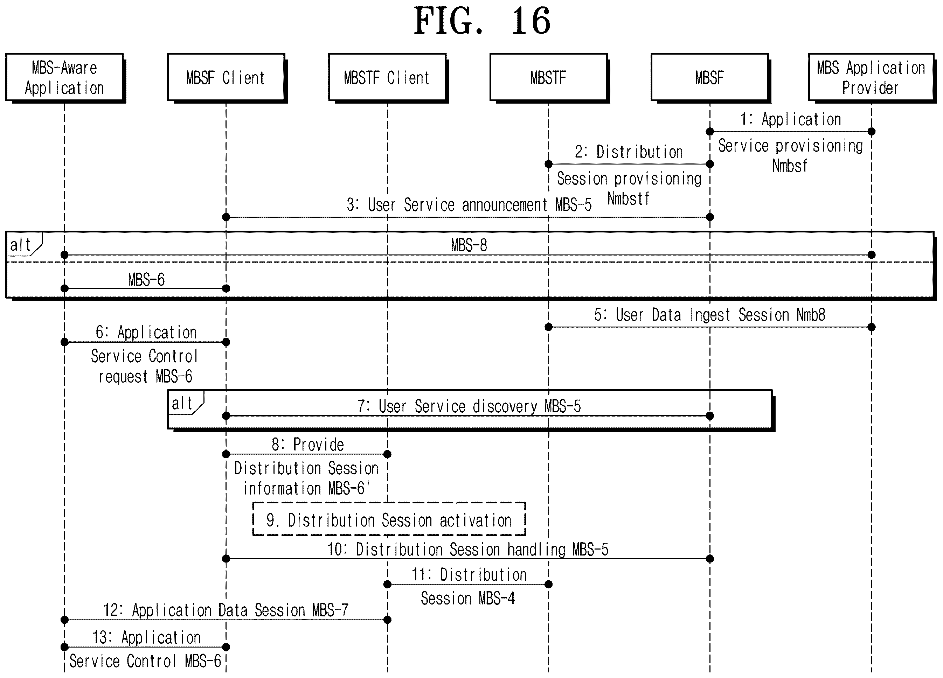

FIG. 16 illustrates an MBS user service according to embodiments.

Regarding a high-level baseline procedure, FIG. 16 shows an operational flow for the MBS user service.
1. The MBS application provider invokes the Nmbsf service at the MBSF and provisions the application service as the MBS user service.
2. The MBSF invokes Nmbstf at the MBSTF and provisions one or more MBS distribution sessions.
3. The MBSF generates a user service announcement accessible to the MBS client of the UE.
4. The MBS application provider notifies the MBS-aware application via an MBS-8 interface that access to a specific application service is available through the MBS user service, in the form of an application service announcement.

Alternatively, the MBSF client synthesizes the application service announcement from the user service announcement received in step 3 and notifies the MBS-aware application via an MBS-6 interface that access to the application service is available through the MBS user service.
5. The MBS application provider creates an MBS user data ingest session with the MBSTF via the MBSF, and the MBSTF ingests user data via Nmb8.
6. The MBS-aware application requests the MBS client to access a specific MBS user service by invoking a procedure at MBS-6.
7. Option: If data is not received in step 3, the MBSF client may query the MBSF via an MBS-5 interface to discover additional access information for the corresponding MBS user service.
8. The MBSF client provides the MBSTF client with MBS distribution session information, obtained as part of the user service announcement, via MBS-6'.
9. The MBSTF client enables reception of the MBS distribution session.
10. The MBSF client continuously processes the MBS distribution session based on updates received via the MBS-5 interface.
11. The MBSTF client receives MBS distribution session data as part of the MBS distribution session via the MBS-4 MC interface.
12. The MBSTF provides the MBS distribution session data to the MBS-aware application via an MBS-7 interface in the MBS application data session.
13. The MBS-aware application invokes an MBS application service control procedure at the MBSF client via MBS-6 to control the MBS user service.

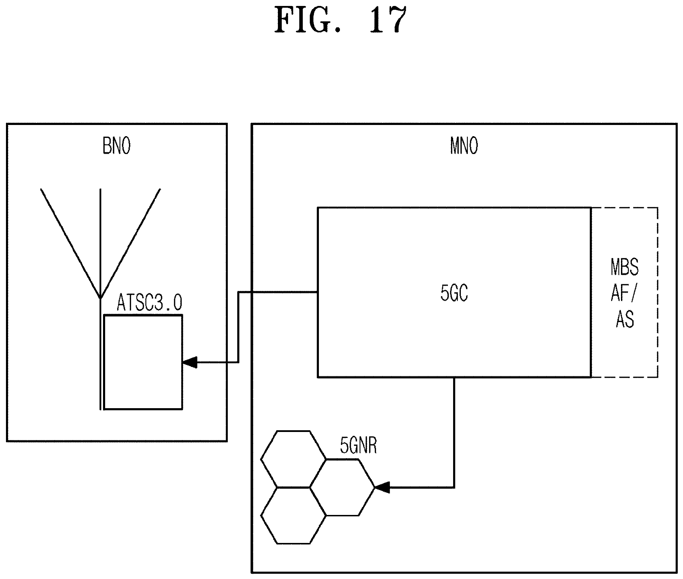

FIG. 17 illustrates a mobile communication MBS based on a broadcast system according to embodiments.

Hereinafter, the operation of a 5G MBS based on ATSC 3.0 will be described.

A scenario in which the 5G MBS is provided through the ATSC 3.0 system is as follows:

### MNO transmission broadcast via ATSC 3.0

A Mobile Network Operator (MNO) may broadcast via a 5G System (5GS), via ATSC 3.0, or via both systems. MNO-based MBS (e.g., linear video, non-real-time data) is typically transmitted to the 5GS via the 5GC and NG-RAN, and may also be delivered to a Broadcast Network Operator (BNO) for broadcast transmission via ATSC 3.0. In this case, the geographic coverage of ATSC 3.0 may differ from or overlap with that of the 5GS.

FIG. 17 illustrates a structure in which an MNO transmission broadcast service is transmitted through the NG-RAN and ATSC 3.0 network. The broadcast service originates from the MBS AF/AS and is transmitted to end users via the NG-RAN through the 5GC, and the broadcast service is also transmitted to the ATSC 3.0 network of the BNO.

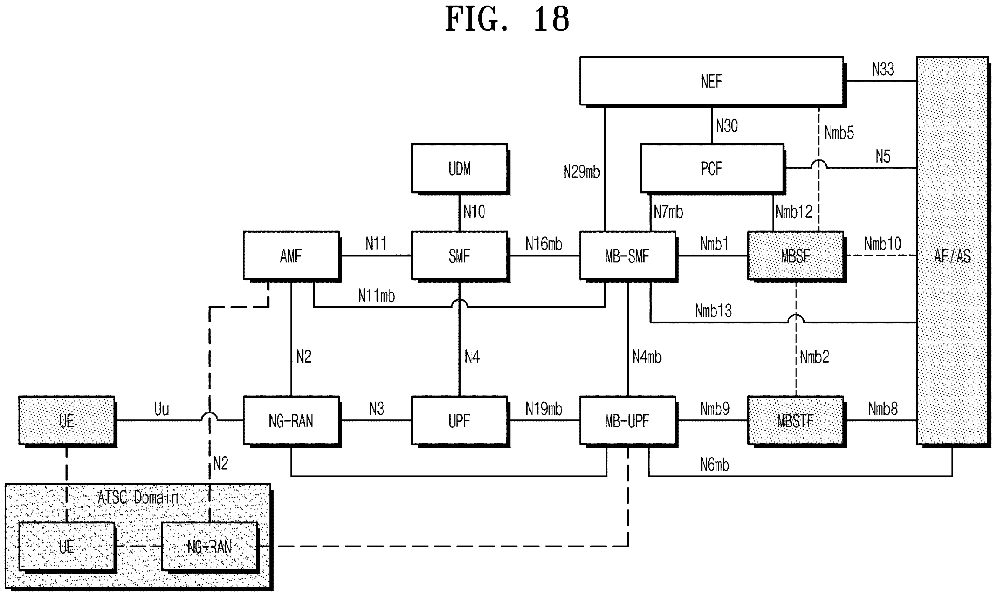

FIG. 18 illustrates a network architecture for applying an MBS for mobile communication to a broadcast system according to embodiments.

Regarding the 5GS architecture for multicast and broadcast services using ATSC 3.0, FIG. 18 illustrates a network architecture for applying a 5G MBS to the ATSC 3.0 broadcast system based on the previously described scenario.

For an interface with the ATSC 3.0 network, an ATSC 3.0 Interworking Function (A3IWF) may be added to the 5G network, thereby providing the 5G MBS to the ATSC 3.0 network. The A3IWF may perform processing related to the interworking between the 3GPP 5G core network and the ATSC 3.0 network.

The A3IWF may be connected to the AMF via the N2 interface for control plane data, and the A3IWF may be connected to the MB-UPF via an N3bm interface for user plane data.

For a broadcast session, the N2 interface is involved in operations such as multicast/broadcast session establishment, session update, and session release. In particular, session establishment includes parameters that identify the broadcast session and the area to which the broadcast session is applied. In the 5GS, a list such as tracking areas or cell IDs may correspond to service area information. To transmit the 5G MBS over the broadcast network, location information of ATSC 3.0 transmitters may be defined in the future.

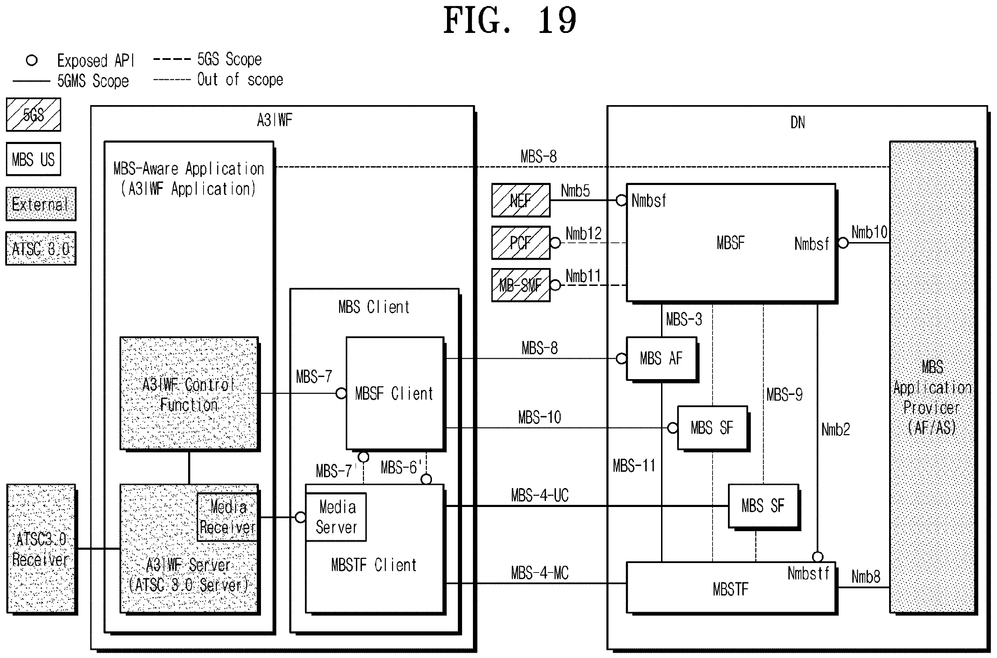

FIG. 19 illustrates functions for providing MBS services over a broadcast network according to embodiments.

The functional entities for ATSC 3.0-based multicast and broadcast include the following.

### A3IWF (ATSC 3.0 Interworking Function):

FIG. 19 shows the overall functional entities for providing MBS user services over the ATSC 3.0 network. The MBS application provider is considered to be deployed in the trusted DN, and the MBS client function may be configured within the A3IWF.

The A3IWF may include the MBS client function, which may be defined as a function that converts MBS services into ATSC 3.0 services and delivers the services to the ATSC 3.0 network.

To provide MBS user services over the ATSC 3.0 network, the A3IWF may include the A3IWF application and the MBS client.

The A3IWF application corresponds to the MBS-aware application in the 5G MBS system.

The A3IWF application may be further composed of the A3IWF control function and the A3IWF server.

The A3IWF control function may be connected to the MBSF client via the MBS-6 interface.

The MBS-6 interface is an Application Programming Interface (API) exposed by the MBSF client, which may be used by the A3IWF control function of the A3IWF application, and is used to manage and control the MBS user service.

The A3IWF control function, as part of the ATSC system manager functionality, may also perform roles such as defining a PLP and assigning IP addresses/port numbers to transmit the services provided by the A3IWF server.

The A3IWF server may be connected to the MBSTF client via the MBS-7 interface.

The MBS-7 interface is an API exposed by the MBSTF client, which may be used by the A3IWF server of the A3IWF application, and is used to receive user data distributed through the MBS user service.

The A3IWF server may configure the function of a media receiver to receive user data transmitted from a media server configured within the MBSTF client.

Multicast MBS session and broadcast MBS session data received via the media receiver configured within the A3IWF server are converted into ATSC 3.0 services by the A3IWF server.

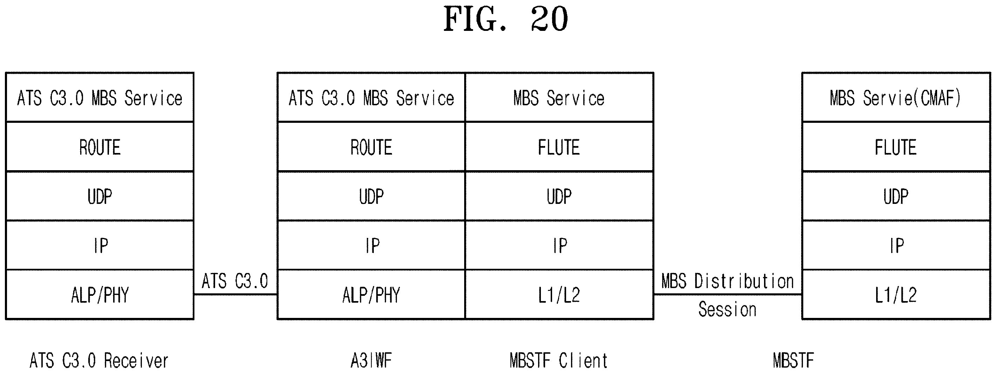

FIG. 20 illustrates a protocol stack for converting MBS data into services for a broadcast system according to embodiments.

Regarding an exemplary protocol stack, FIG. 20 illustrates a protocol stack for a process in which MBS distribution session data transmitted from the MBSTF is converted into ATSC 3.0 services by the A3IWF.

One of the main functions of the A3IWF is to receive MBS user service session data of the MBS user service and convert the data into an ATSC 3.0-based Real-time Object Delivery over Unidirectional Transport (ROUTE) session, which is then transmitted to the ATSC 3.0 network.

Dynamic Adaptive Streaming over HTTP (DASH) segments may be structured in the form of CMAF segments, and the CMAF segments may be distributed via the File Delivery over Unidirectional Transport (FLUTE) protocol using the object distribution method for MBS distribution.

When the CMAF is transmitted via the FLUTE protocol through the MBS distribution session, the MBSTF client of the A3IWF receives the CMAF.

The MBSTF client receives the CMAF segments via the FLUTE protocol and reconstructs the CMAF segments into the DASH segments.

The MBS user data (DASH segments) received via the MBS-7 interface is transmitted to the A3IWF server.

The A3IWF server encapsulates the DASH segments into the ROUTE protocol for ATSC 3.0 services and transmits the DASH segments over the ATSC 3.0 network based on IP/UDP.

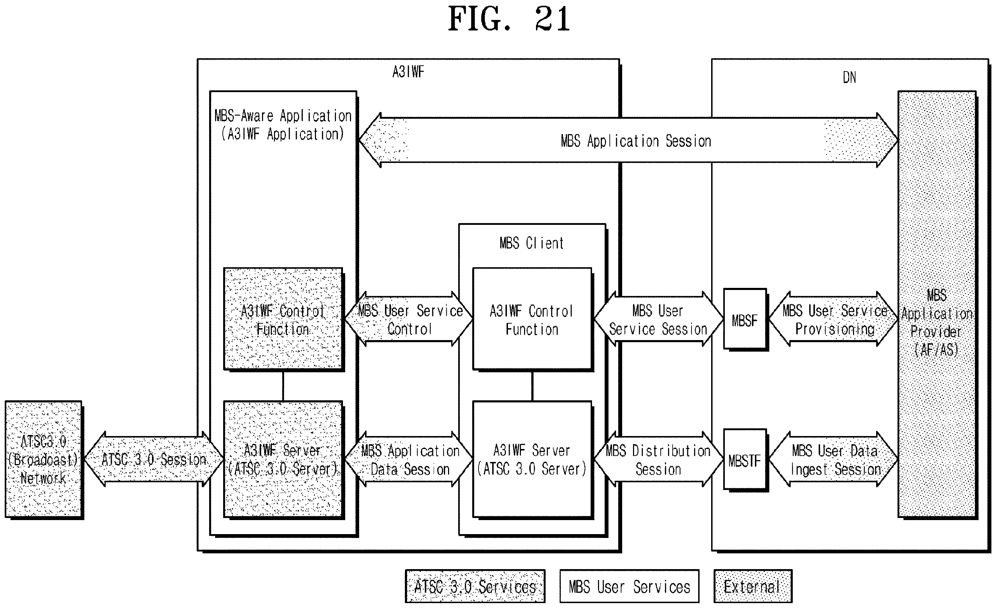

FIG. 21 illustrates a structure for providing an MBS for mobile communication via a broadcast system according to embodiments.

Regarding a domain model and procedure, FIG. 21 shows a domain model for providing a 5G MBS through an ATSC 3.0 system.

In FIG. 21, the domain model may operate according to the following procedure.
1. The MBS application provider initiates MBS user service provisioning with the MBSF to provision an MBS user service.
2. Subsequently, the MBS application provider provisions multiple time-bound MBS user data ingest sessions within the scope of the newly provisioned MBS user service through the MBS user service provisioning.

If the current time enters the time window of the provisioned MBS user data ingest session:
3. The MBSF establishes an MBS session in the MBS system to establish an MBS user service session of a higher-level MBS user service. The reception parameters of the MBS session are advertised through an MBS user service announcement, which is delivered back to the MBS application provider through the MBS user service provisioning.
4. The MBSTF establishes an MBS user data ingest session between the MBS application provider and the MBSTF to ingest objects or packets according to the distribution method defined during the provisioning step.
5. The MBSTF establishes an MBS distribution session and starts transmitting the objects or packets from the MBS user data ingest session according to the configured distribution method if the objects or packets are deliverable.

If the MBS user service is established:
6. The MBS-aware application instructs the MBSF client to activate the MBS user service through MBS user service control.

To provide the MBS user service over the ATSC 3.0 network, the MBS-aware application may be defined as the A3IWF application, and the A3IWF control function of the A3IWF application may instruct the MBSF client to activate the MBS user service through the MBS user service control.

7. The MBSF client may obtain the MBS user service announcement from the MBSF via the MBS user service (or MBS distribution session) and deliver selected application-related parameters (such as service class and service name) to the MBS-aware application through the MBS user service control. Alternatively, the MBS user service announcement may be provided by the MBS application provider. In this case, the MBS-aware application obtains the MBS user service announcement through an application-private MBS application service and then provides the MBS user service announcement to the MBSF client via the MBS user service control.

To provide the MBS user service over the ATSC 3.0 network, the MBS-aware application may be defined as the A3IWF application, and the MBSF client may deliver application-related parameters to the A3IWF application through the MBS user service control.

Alternatively, if the MBS user service announcement is provided by the MBS application provider, the A3IWF application obtains the MBS user service announcement through the application-private MBS application service and then provides the MBS user service announcement to the MBSF client through the MBS user service control by the A3IWF control function.

8. The MBS-aware application selects the announced MBS user service through the MBS user service control, and as a result, the MBSF client activates the MBSTF client to receive the corresponding MBS distribution session.

To provide the MBS user service over the ATSC 3.0 network, the MBS-aware application may be defined as the A3IWF application, and the A3IWF application (A3IWF control function) may select the announced MBS user service through the MBS user service control, and as a result, the MBSF client may activate the MBSTF client to receive the corresponding MBS distribution session.

9. An MBS application data session is established between the MBSTF client and the MBS-aware application to provide the received user data to the MBS-aware application.

To provide the MBS user service over the ATSC 3.0 network, the MBS-aware application may be defined as the A3IWF application, and the MBS application data session may be established between the MBSTF client and the A3IWF server of the A3IWF application to provide the received user data to the A3IWF application. The user data received at the A3IWF application is converted into an ATSC 3.0 service by the A3IWF server and transmitted to the ATSC 3.0 network.

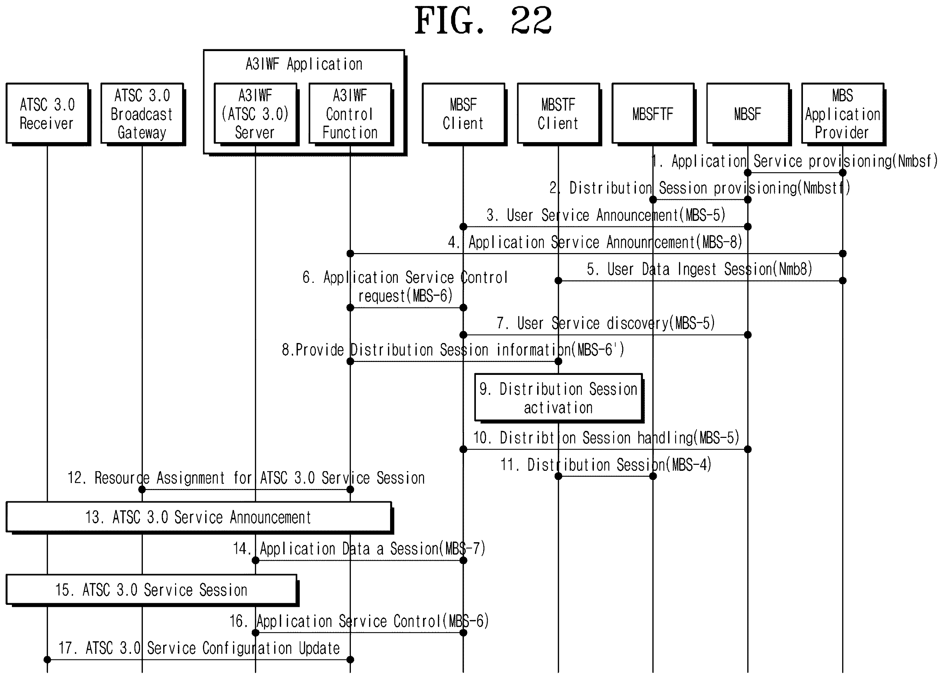

FIG. 22 illustrates a flowchart for providing an MBS for mobile communication via a broadcast system according to embodiments.

Referring to the call flow, regarding a high-level baseline procedure, FIG. 22 illustrates a process of providing a 5G MBS over an ATSC 3.0 network.

### 1. Application Service Provisioning

The MBS application provider invokes an Nmbsf service at the MBSF to provision the application service as an MBS user service.

### 2. Distribution Session Provisioning

The MBSF invokes Nmbstf at the MBSTF to provision one or more MBS distribution sessions.

### 3. User Service Announcement Step

The MBSF generates a user service announcement accessible to the MBS client of the UE.

### 4. Application Service Announcement

The MBS application provider notifies the A3IWF application via the MBS-8 interface that access to a specific application service is available through the MBS user service, in the form of an application service announcement.

Alternatively, the MBSF client synthesizes the application service announcement from the user service announcement received in step 3 and notifies the A3IWF application, via the A3IWF control function using the MBS-6 interface, that access to the application service is available through the MBS user service.

### 5. User Data Ingestion Session

The MBS application provider creates an MBS user data ingestion session with the MBSTF through the MBSF, and the MBSTF ingests user data via Nmb8.

### 6. Application Service Control

The A3IWF control function of the A3IWF application invokes a procedure via the MBS-6 interface to request the MBSF client to access a specific MBS user service.

### 7. User Service Discovery

If user service announcement data is not received, the MBSF client may query the MBSF via the MBS-5 interface to discover additional access information for the corresponding MBS user service.

### 8. Distribution Session Information Delivery

The MBSF client provides the MBSTF client with MBS distribution session information, obtained as part of the user service announcement, via MBS-6'.

### 9. Distribution Session Activation

The MBSTF client activates reception of an MBS distribution session.

### 10. Distribution Session Handling

The MBSF client continuously processes the MBS distribution session based on updated information received via the MBS-5 interface.

### 11. Distribution Session Step

The MBSTF client receives MBS distribution session data as part of the MBS distribution session via the MBS-4 MC interface.

### 12. Resource Assignment for ATSC 3.0 Service Session

The A3IWF control function of the A3IWF application requests a broadcast gateway to allocate resources (such as IP address, port number, and PLP) for an ATSC 3.0 service session.

### 13. ATSC 3.0 Service Announcement

Based on the user service announcement and application service announcement information received in steps 3 and 4, an ATSC 3.0 service announcement is performed.

### 14. Application Data Session

The MBSTF provides the MBS distribution session data to the A3IWF server of the A3IWF application via the MBS-7 interface in an MBS application data session.

### 15. ATSC 3.0 Service Session

The A3IWF server of the A3IWF application converts the protocol of the application data session into an ATSC 3.0 protocol and provides ATSC 3.0 service data to the ATSC 3.0 receiver via a broadcast network.

### 16. Application Service Control

The A3IWF control function of the A3IWF application invokes an MBS application service control procedure at the MBSF client via MBS-6 to control the MBS user service.

### 17. ATSC 3.0 Service Configuration Update

If there is updated information for the MBS user service through the MBS application control procedure in step 16, the updated information may be applied to the ATSC 3.0 service configuration.

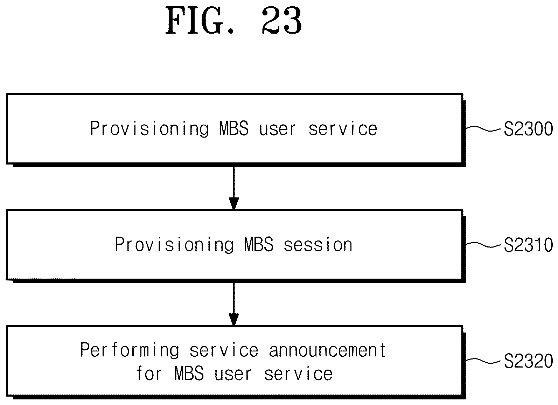

FIG. 23 illustrates a broadcast service transmission method for providing multicast and broadcast services in mobile communication according to embodiments.

The broadcast service transmission method for providing multicast and broadcast services in mobile communication (hereinafter, the broadcast service transmission method according to the embodiments) includes the operations described in FIGS. 1 to 22 and may be performed by the MBS application provider and/or the A3IWF illustrated in FIG. 21.

The broadcast service transmission method according to the embodiments may include provisioning an MBS user service (S2300).

The broadcast service transmission method according to the embodiments may further include provisioning an MBS session (S2310).

The broadcast service transmission method according to the embodiments may further include performing a service announcement for the MBS user service (S2320).

Referring to FIG. 22, provisioning the MBS user service (S2300) includes step 1 (Application Service Provisioning) of FIG. 22. Provisioning the MBS session (S2310) includes step 2 (Distribution Session Provisioning) of FIG. 22. Performing the service announcement for the MBS user service (S2320) includes step 3 (User Service Announcement) of FIG. 22.

The method of FIG. 23 may further include: requesting the MBS user service; and requesting allocation of resource information for a broadcast session. Requesting the MBS user service may include step 6 (Application Service Control) of FIG. 22. Requesting the allocation of the resource information for the broadcast session may include step 12 (Resource Assignment for ATSC 3.0 Service Session) of FIG. 22.

The method of FIG. 23 may further include: performing a broadcast service announcement based on the service announcement for the MBS user service; and receiving MBS session information. Performing the broadcast service announcement may include step 13 (ATSC 3.0 Service Announcement) of FIG. 22. Receiving the MBS session information may include step 14 (Application Data Session) of FIG. 22.

The method of FIG. 23 may further include: converting a protocol related to MBS into a protocol related to broadcast; and transmitting a broadcast service based on a broadcast network. The protocol conversion and the broadcast service transmission may include step 15 (ATSC 3.0 Service Session) of FIG. 22.

The method of FIG. 23 may further include: controlling the MBS user service; and checking for updates to the MBS user service. Controlling the MBS user service may include step 16 (Application Service Control) of FIG. 22. Checking for the updates may include step 17 (ATSC 3.0 Service Configuration Update) of FIG. 22.

Referring to FIG. 20, session data of the MBS user service is converted into ROUTE data of the broadcast network, segments for the broadcast service are constructed from segments of an MBS service, and the segments for the broadcast service may be encapsulated based on a ROUTE protocol of the broadcast network.

Referring to FIG. 21, a broadcast service transmission apparatus configured to provide multicast and broadcast services in mobile communication includes: a memory; and a processor configured to perform a broadcast service transmission method stored in the memory. The transmission method may include: provisioning an MBS user service; provisioning an MBS session; and performing a service announcement for the MBS user service. The transmission apparatus may be a network server.

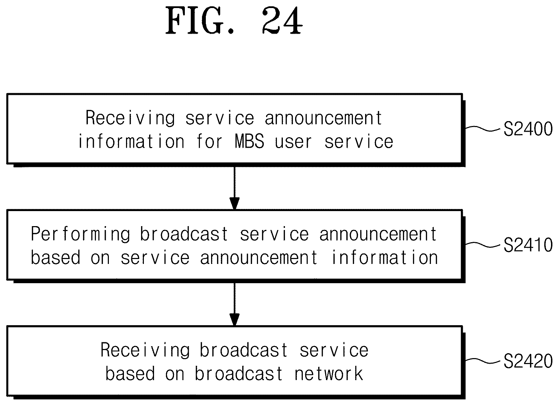

FIG. 24 illustrates a broadcast service reception method for providing multicast and broadcast services in mobile communication according to embodiments.

The broadcast service reception method for providing multicast and broadcast services in mobile communication (hereinafter, the broadcast service reception method according to the embodiments) includes the operations described in FIGS. 1 to 22 and may be performed by the ATSC 3.0 network-based receiver illustrated in FIGS. 21 and 22.

The broadcast service reception method according to embodiments may include receiving service announcement information for an MBS user service (S2400).

The broadcast service reception method according to the embodiments may further include performing a broadcast service announcement based on the service announcement information (S2410).

The broadcast service reception method according to the embodiments may further include receiving a broadcast service based on a broadcast network (S2420).

Receiving service the announcement information (S2400) may include step 13 (ATSC 3.0 Service Announcement) of FIG. 22.

Performing the broadcast service announcement (S2410) may include step 15 (ATSC 3.0 Service Session) of FIG. 22.

Receiving the broadcast service (S2420) may include step 17 (ATSC 3.0 Service Configuration Update) of FIG. 22.

As in step 15 of FIG. 22, the broadcast service may be received based on ROUTE data of the broadcast network generated by converting session data of the MBS user service.

Regarding the protocol stack in step 15 of FIG. 22, segments for the broadcast service are constructed from segments of an MBS service, and the segments for the broadcast service are received and generated by being encapsulated based on a ROUTE protocol of the broadcast network.

The broadcast service is received via the broadcast network based on updates to the MBS user service.

A broadcast service reception apparatus configured to provide multicast and broadcast services in mobile communication, as a broadcast receiver, includes: a memory; and a processor configured to perform a broadcast service reception method stored in the memory. The method may include: receiving service announcement information for an MBS user service; performing a broadcast service announcement based on the service announcement information; and receiving a broadcast service based on a broadcast network.

According to the embodiments, MBS provided by a mobile communication system such as a 5G system may be received through a broadcast network. Interworking with functions used in existing broadcast networks enables seamless MBS even in various network environments. By transmitting MBS of mobile communication over a broadcast network, the MBS may be received even outside the coverage of a mobile communication network. Even when multiple devices are connected to different networks, the same level of broadcast service may be provided.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a," "an," and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts, and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

### MODE FOR DISCLOSURE

As described above, related details have been described in the best mode for carrying out the embodiments.

### INDUSTRIAL APPLICABILITY

As described above, the embodiments may be applied in whole or in part to the method and apparatus for transmitting and receiving a mobile communication multicast/broadcast service based on a broadcast network.

Those skilled in the art may change or modify the embodiments in various ways within the scope of the embodiments.

Embodiments may include variations/modifications within the scope of the claims and their equivalents.

## Claims

1. A broadcast service transmission method for providing multicast and broadcast services in mobile communication, the method comprising:
provisioning a Multicast/Broadcast Service (MBS) user service;
provisioning an MBS session; and
performing a service announcement for the MBS user service.

2. The method of claim 1, further comprising:
requesting the MBS user service; and
requesting allocation of resource information for a broadcast session.

3. The method of claim 1, further comprising:
performing a broadcast service announcement based on the service announcement for the MBS user service; and
receiving MBS session information.

4. The method of claim 1, further comprising:
converting a protocol related to MBS into a protocol related to broadcast; and
transmitting a broadcast service based on a broadcast network.

5. The method of claim 1, further comprising:
controlling the MBS user service; and
checking for updates to the MBS user service.

6. The method of claim 4, wherein session data of the MBS user service is converted into Real-time Object Delivery over Unidirectional Transport (ROUTE) data of the broadcast network,
wherein segments for the broadcast service are constructed from segments of an MBS service, and
wherein the segments for the broadcast service are encapsulated based on a ROUTE protocol of the broadcast network.

7. A broadcast service transmission apparatus configured to provide multicast and broadcast services in mobile communication, the apparatus comprising:
a memory; and
a processor configured to perform a broadcast service transmission method stored in the memory,
wherein the method comprises:
provisioning a Multicast/Broadcast Service (MBS) user service;
provisioning an MBS session; and
performing a service announcement for the MBS user service.

8. A broadcast service reception method for providing multicast and broadcast services in mobile communication, the method comprising:
receiving service announcement information for a Multicast/Broadcast Service (MBS) user service;
performing a broadcast service announcement based on the service announcement information; and
receiving a broadcast service based on a broadcast network.

9. The method of claim 8, wherein the broadcast service is received based on Real-time Object Delivery over Unidirectional Transport (ROUTE) data of the broadcast network generated by converting session data of the MBS user service.

10. The method of claim 9, wherein segments for the broadcast service are constructed from segments of an MBS service, and
wherein the segments for the broadcast service are generated by being encapsulated based on a ROUTE protocol of the broadcast network.

11. The method of claim 9, wherein the broadcast service is received via the broadcast network based on updates to the MBS user service.

12. A broadcast service reception apparatus configured to provide multicast and broadcast services in mobile communication a memory; and
a processor configured to perform a broadcast service reception method stored in the memory,
wherein the method comprises:
receiving service announcement information for a Multicast/Broadcast Service (MBS) user service;
performing a broadcast service announcement based on the service announcement information; and
receiving a broadcast service based on a broadcast network.

13. The apparatus of claim 12, wherein the broadcast service is received based on Real-time Object Delivery over Unidirectional Transport (ROUTE) data of the broadcast network generated by converting session data of the MBS user service.

14. The apparatus of claim 13, wherein segments for the broadcast service are constructed from segments of an MBS service, and
wherein the segments for the broadcast service are generated by being encapsulated based on a ROUTE protocol of the broadcast network.

15. The apparatus of claim 13, wherein the broadcast service is received via the broadcast network based on updates to the MBS user service.
